# EUROPÄISCHE PATENTSCHRIFT

(11) **EP 2 057 885 B1**
(45) Veröffentlichungstag und Bekanntmachung des Hinweises auf die Patenterteilung: **12.05.2010**
(21) Anmeldenummer: 08018951.7
(22) Anmeldetag: 30.10.2008
(51) Int. Cl.: A01D 57/02

(54) **Zinkenträgeranordnung**
Tooth bearer assembly
Agencement de support de branche

(30) Priorität: 08.11.2007 DE 102007053628
(43) Veröffentlichungstag der Anmeldung: 13.05.2009
(73) Patentinhaber: Erfindergemeinschaft Gustav und Fred Schumacher GbR, 57612 Eichelhardt (DE)
(72) Erfinder: Schumacher, Gustav, 57612 Eichelhardt (DE); Schumacher, Friedrich-Wilhelm, 57612 Eichelhardt (DE)
(74) Vertreter: Müller, Thomas Michael

(56) Entgegenhaltungen:
- WO-A-96/26636
- US-A- 3 869 847
- US-A- 5 359 839
- US-B1- 6 170 244
- US-B1- 6 199 358

## Beschreibung

Die Erfindung betrifft eine Zinkenträgeranordnung, für eine Haspel einer Erntemaschine für Halmfrüchte, umfassend einen Zinkenträger, der um eine Drehachse drehbar an der Haspel befestigbar ist, ein Stellelement, das mit einer Stellanordnung der Haspel zum Verdrehen des Zinkenträgers um die Drehachse verbindbar ist, und Verbindungsmittel, mittels derer der Zinkenträger und das Stellelement miteinander verbindbar sind.

Grundsätzlich werden zwei Typen von Haspeln unterschieden. Zum einen die einfache Paddelhaspel, die nur mit zinkenlosen Paddelleisten das Erntegut dem Schneidwerk der Erntemaschine zuführt und zum anderen die Zinkenhaspel, die Paddelrohre oder Leisten ausweist, an denen Stahl- oder Kunststoffzinken vorstehend befestigt sind.

Die Zinkenhaspel hat sich beim Mähdreschen gegenüber der einfachen Paddelhaspel durchgesetzt, da nur sie in der Lage ist, auch Lagergetreide oder verwirbeltes Erntegut sicher dem Schneidwerk zuzuführen. Die Zinken werden derart gesteuert, dass sie immer im gleichen Winkel, meist in etwa vertikal nach unten gerichtet, vor der Maschine in das Erntegut eintauchen. Das geschieht durch eine Steuerung, bei der die Zinkenträger, in der Regel in Form von Rohren, mit Kurbelarmen versehen sind, die über eine Kurvenbahn die Zinkenträger entsprechend drehen. Die Kurvenbahnen können unterschiedlich ausgebildet sein. Sie können die Zinkenträger immer in gleicher Richtung drehen oder, je nach Ausbildung der Kurvenbahn, bei einer Umdrehung über einen Betrag vor und zurück drehen. Ein Kurbelarm ist hiermit stets mit dem Zinkenträgerrohr fest verbunden, damit der Winkel zu dem Zinken eingehalten werden kann und jeder der meist mehreren Zinkenträger einer Haspel den gleichen Eingriffswinkel zum Erntegut einnimmt.

Soll der Eingriffswinkel der Zinken aller Zinkenträger verändert werden, wird die Steuerkurve verstellt.

Derartige Zinkenträgersteuerungen sind beispielsweise aus der DE-A-26 29 353,der US-A-4 098 061 und der US-B-6 170 244 bekannt. Eine Zinkenträgeranordnung der eingangs beschriebenen Art ist aus der US-A-5 359 839 bekannt.

Die meisten Haspeln für Mähdrescher weisen sechs Zinkenträger auf. Es kann wünschenswert sein, dass im Wechsel unterschiedliche Winkelstellungen der Zinken zum Erntegut vorgesehen sind. Dies hat den Vorteil, dass bei entsprechender Haspeldrehgeschwindigkeit das Erntegut von unterschiedlich eingestellten Zinken dem Schneidwerk zugeführt werden kann. So ist es beispielsweise von Vorteil, wenn eine Haspelteilung das Erntegut vor der Messerlinie des Schneidwerks aufgenommen wird und die darauf folgende Haspelteilung das Material in die Einzugsschnecke schiebt.

Bei anderen Einsatzfällen, beispielsweise bei der Ernte von Sonnenblumen, sollen keine Zinken in das Erntegut eingreifen sondern nur die Trägerrohre bzw. Zinkenträger. Damit bei einem solchen Einsatzfall nicht alle Zinken von den jeweiligen Zinkenträgern abmontiert werden müssen, ist es vorteilhaft, den Zinkenträger um 180° verdrehen zu können, damit die Zinken, statt nach unten gerichtet, nicht in das ausfallempfindliche Erntegut einstechend nach oben gerichtet und damit nicht eingreifend positioniert sind.

Die Aufgabe der vorliegenden Erfindung ist es, eine Zinkenträgeranordnung der eingangs genannten Art und eine Haspel bereitzustellen, bei der die Zinkenträger einfach gegenüber der Stellanordnung verstellt werden können und ein separates Verstellen jedes einzelnen Zinkenträgers möglich ist.

Die Aufgabe wird erfindungsgemäß durch eine Zinkenträgeranordnung nach Anspruch 1 gelöst. Vorteilhafte Ausführungsformen ergeben sich aus den Unteransprüchen.

Somit ist es möglich, jeden einzelnen Zinkenträger gegenüber dem Stellelement bzw. gegenüber der Haspel zu verdrehen. Hierzu wird das Stellelement vom Zinkenträger gelöst. Hieraufhin kann der Zinkenträger an der Haspel verdreht werden bis die gewünschte Winkelposition erreicht ist. Danach wird das Stellelement wieder mit dem Zinkenträger drehfest verbunden. Es ist keine aufwendige bauliche Anpassung des Zinkenträgers erforderlich, die zudem keine nachträgliche Einstellung ermöglichen würde. Ferner muß auch nicht das Stellelement selbst verändert werden oder sogar die Stellanordnung. Es ist somit eine einfache Verstellmöglichkeit gegeben. Zudem läßt sich jeder Zinkenträger separat individuell verstellen.

Der Zinkenträger und das Stellelement können hierbei formschlüssig oder kraftschlüssig miteinander verbunden sein.

Vorzugsweise weisen die Verbindungsmittel einen Verbindungsflansch am Zinkenträger und einen Verbindungsabschnitt am Stellelement auf, die miteinander verbunden sind.

Hierbei kann der Zinkenträger mit dem Stellelement verschraubt sein.

Es kann vorgesehen sein, dass in dem Verbindungsflansch um die Drehachse verteilt erste Befestigungsbohrungen angeordnet sind. Hierbei weist das Stellelement eine bestimmte Anzahl zweiter Befestigungsbohrungen auf, die je nach Drehposition des Zinkenträgers und des Stellelements zueinander mit einer entsprechenden Anzahl von ersten Befestigungsbohrungen in Überdeckung gebracht werden können. In die Überdeckung gebrachten Befestigungsbohrungen lassen sich Befestigungsschrauben einführen, die den Zinkenträger mit dem Stellelement verbinden. Somit läßt sich das Stellelement stufenweise zum Zinkenträger verdrehen und befestigen.

In Ausgestaltung kann vorgesehen sein, dass zwei zweite Bohrungen vorgesehen sind, die mit zwei diametral zueinander angeordneten ersten Bohrungen in Überdeckung angeordnet werden können.

Alternativ zu einer reinen Schraubverbindung kann vorgesehen sein, dass der Verbindungsflansch eine Stirnverzahnung mit in Richtung der Drehachse vorstehenden Rastzähnen aufweist. Hierbei weist der Verbindungsabschnitt des Stellelements entsprechend gestaltete Rastzähne auf, die in Verzahnungseingriff zur Stirnverzahnung des Verbindungsflansches steht. Somit ist eine drehfeste Verbindung gegeben. Vorzugsweise sind die Stirnverzahnungen in Form einer Hirthverzahnung ausgestaltet.

Zur axialen Fixierung kann wiederum eine Schraubverbindung vorgesehen sein, die zum Verdrehen gelöst wird. Daraufhin wird das Stellelement geringfügig axial entlang der Drehachse verschoben, bis die Stirnverzahnungen des Verbindungsflansches und des Verbindungsabschnitts außer Eingriff kommen, so dass sich das Stellelement zum Verbindungsflansch verdrehen lässt. Zum drehfesten Verbinden werden die Stirnverzahnungen wieder in Eingriff überführt und zum Beispiel mittels einer Schraubverbindung gesichert.

Als Sicherung dafür, dass die Verzahnungen nicht auseinanderkommen, sind auch andere Möglichkeiten denkbar, wie Klemmverbindungen oder sonstige bekannte Sicherungsmittel.

Als weitere Alternative kommt eine Klemmverbindung zwischen dem Stellelement und dem Zinkenträger in Frage. Hierbei kann der Verbindungsabschnitt zwei Klemmelemente aufweisen, die auf den Zinkenträger geklemmt sind. Hierbei kann beispielsweise vorgesehen sein, dass die beiden Klemmelemente eine Bohrung bilden, durch die der Zinkenträger, zum Beispiel in Form eines Rohres, hindurchgeführt ist, wobei die beiden Klemmelemente auf der Außenumfangsfläche des Zinkenträgers geklemmt sind.

Die Aufgabe wird ferner durch eine Haspel gelöst, welche mehrere Haspelsterne, die um eine Rotationsachse drehbar angeordnet sind, aufweist. Mehrere Zinkenträgeranordnungen wie vorangehend erläutert sind mit mindestens zwei Haspelsternen um eine Drehachse parallel zur Rotationsachse drehbar an diesen befestigt. Ferner ist eine Stellanordnung vorgesehen, zu der die Haspelsterne drehbar sind und mit der die Stellelemente jedes Zinkenträgers antriebsverbunden sind.

Vorzugsweise ist hierbei die Stellanordnung in Form einer Stellkurve vorgesehen, wobei Führungselemente der Stellelemente entlang der Stellkurve geführt sind.

Bevorzugte Ausführungsbeispiele der Erfindung werden im folgenden anhand der Zeichnungen näher erläutert. Hierin zeigen
- Figur 1: eine erfindungsgemäße Zinkenträgeranordnung mit Verbindungsmitteln in Form von Schraubverbindungen;
- Figur 2: eine Draufsicht eines Verbindungsflansches mit Befestigungsbohrungen;
- Figur 3: ein Stellelement mit Befestigungsbohrungen;
- Figur 4: eine Zinkenträgeranordnung mit Verbindungsmitteln in Form von Stirnverzahnungen;
- Figur 5: eine Zinkenträgeranordnung mit Verbindungsmitteln in Form einer Klemmverbindung und
- Figur 6: eine Seitenansicht der Klemmverbindung gemäß Figur 5.

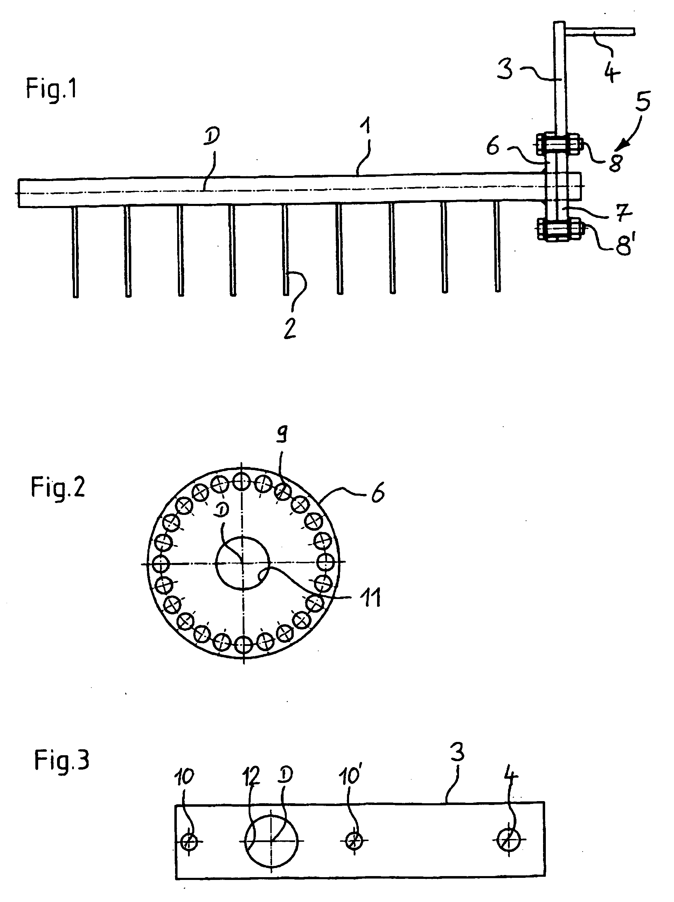

Figur 1 zeigt eine Ansicht einer erfindungsgemäßen Zinkenträgeranordnung. Die Zinkenträgeranordnung umfasst einen Zinkenträger 1 in Form eines Rohres. Der Zinkenträger 1 ist parallel zu einer hier nicht dargestellten Rotationsachse einer Haspel drehbar um eine Drehachse D an der Haspel befestigt. Die Haspel weißt hierzu Haspelkreuze auf, die um die Rotationsachse drehbar sind und an der mehrere Zinkenträger 1 drehbar gelagert sind. Hierzu sind die Zinkenträger 1 in der Regel an ihren Enden an den Haspelsternen gelagert.

An dem Zinkenträger 1 sind mehrere Greiferzinken 2 befestigt, die radial von der Drehachse D vorstehen. Ferner ist an dem Zinkenträger 1 ein Hebel 3 drehfest und lösbar verbunden, der mit einer hier nicht dargestellten Steueranordnung der Haspel zusammenwirkt und den Zinkenträger 1 gegenüber der Haspel verdreht. Der Hebel weist parallel zur Drehachse D ein Steuerteil 4 in Form einer Stange auf, die an einer Steuerkurve der Steueranordnung geführt ist. Hierzu kann das Steuerteil 4 entweder direkt gegen die Steuerkurve in Anlage kommen oder über eine Rolle gegen diese abgestützt sein. Durch einen veränderlichen Abstand der Steuerkurve zur Drehachse D wird das Steuerteil 4 und damit der Zinkenträger 1 gegenüber der Haspel verdreht.

Der Hebel 3 ist über Verbindungsmittel 5 lösbar mit dem Zinkenträger 1 verbunden. Die Verbindungsmittel 5 umfassen einen Verbindungsflansch 6 in Form einer rondenförmigen Scheibe, welche auf den rohrförmigen Zinkenträger 1 aufgeschoben ist und an diesen verschweißt ist. Ferner umfassen die Verbindungsmittel 5 einen Verbindungsabschnitt 7 des Hebels 3, mit dem der Hebel 3 über Befestigungsschrauben 8 lösbar an dem Verbindungsflansch 6 befestigt ist.

Figur 2 zeigt eine Draufsicht des Verbindungsflansches gemäß Figur 1 und Figur 3 eine Draufsicht eines Hebels 3 gemäß Figur 1. Die Figuren 2 und 3 werden im folgenden zusammen beschrieben.

Der Verbindungsflansch 6 weist eine zentrale Bohrung 11 auf, mit der er auf den rohrförmigen Zinkenträger 1 aufgeschoben ist. Um die Drehachse D verteilt sind eine Vielzahl erster Befestigungsbohrungen 9 in dem Verbindungsflansch 6 angeordnet, wobei die Achsen der ersten Verbindungsbohrungen 9 parallel zur Drehachse D angeordnet sind. Der Hebel 3 weist eine Bohrung 12 auf, mit der der Hebel 3 auf den rohrförmigen Zinkenträger 1 aufgeschoben ist. Parallel zur Drehachse D sind zwei zweite Befestigungsbohrungen 10, 10' angeordnet, die bezogen auf die Drehachse D diametral zueinander angeordnet sind. Die zwei zweiten Befestigungsbohrungen 10, 10' lassen sich bei der Montage des Hebels 3 in Überdeckung mit zwei der ersten Befestigungsbohrungen 9 bringen, so dass mittels der Befestigungsschrauben 8, 8' der Hebel 3 an dem Verbindungsflansch 6 befestigt werden kann. Im vorliegenden Beispiel werden die Befestigungsschrauben 8, 8' hierbei durch die in Überdeckung gebrachten ersten und zweiten Befestigungsbohrungen 9, 10, 10' hindurchgeführt und mittels einer Mutter verspannt. Grundsätzlich sind auch andere Schraubverbindungsmöglichkeiten denkbar. Zum Beispiel kann entweder der Verbindungsflansch 6 oder der Hebel 3 Befestigungsbohrungen in Form von Gewindebohrungen aufweisen.

Wenn der Zinkenträger 1 nun gegenüber den anderen Zinkenträger der Haspel bzw. gegenüber der Haspel verdreht werden soll, werden die Befestigungsschrauben 8, 8' gelöst. Die Befestigungsschrauben 8, 8' werden aus den Befestigungsbohrungen 9, 10, 10' rausgezogen. Daraufhin läßt sich der Hebel 3 auf dem Zinkenträger 1 drehen. Der Hebel 3 kann dann bei der gewünschten Drehstellung des Zinkenträgers 1 gegenüber der Haspel in eine Position überführt werden, in der wiederum die beiden zweiten Befestigungsbohrungen 10, 10' mit zwei ersten Befestigungsbohrungen 9 in Überdeckung liegen, so dass der Hebel 3 mit den Befestigungsschrauben 8, 8' an dem Verbindungsflansch 6 befestigt werden kann. Somit läßt sich jeder einzelne Zinkenträger 1 einer Haspel separat von den übrigen Zinkenträgern individuell verstellen.

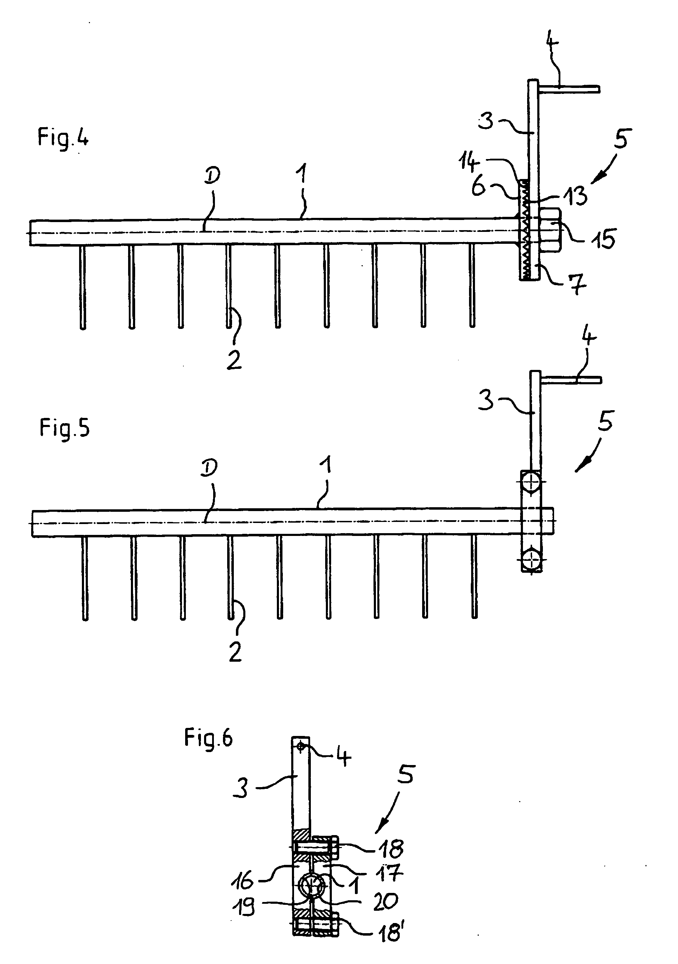

Figur 4 zeigt eine zweite Ausführungsform einer erfindungsgemäßen Zinkenträgeranordnung. Die zweite Ausführungsform entspricht in weiten Teilen der ersten Ausführungsform gemäß der Figuren 1 bis 3. Übereinstimmende Bauteile sind daher mit gleichen Bezugszeichen versehen und bei den Figuren 1 bis 3 beschrieben.

Im Unterschied zu den Verbindungsmitteln 5 gemäß der ersten Ausführungsform weist die zweite Ausführungsform einen Verbindungsflansch 6 mit einer stirnseitigen Verzahnung mit ersten Rastzähnen 13 auf. Die ersten Rastzähne 13 stehen in Richtung der Drehachse D von dem Verbindungsflansch 6 in Richtung zum Verbindungsabschnitt 7 des Hebels 3 vor. Der Verbindungsabschnitt 7 des Hebels 3 weist in Richtung zum Verbindungsflansch 6 vorstehende zweite Rastzähne 14 auf, wobei im verbundenen Zustand die ersten Rastzähne 13 und die zweiten Rastzähne 14 in Zahnungseingriff stehen und somit eine drehfeste Verbindung zwischen dem Hebel 3 und dem Verbindungsflansch 6 gewährleisten. Zur Sicherung des Hebels 3 ist eine Wellenmutter 15 auf einen Gewindeabschnitt des rohrförmigen Zinkenträgers 1 aufgeschraubt, so dass der Verbindungsabschnitt 17 fest gegen den Verbindungsflansch 6 gehalten ist. Zum Lösen der Verbindung wird die Wellenmutter 15 gelöst und der Hebel 3 soweit axial auf dem Zinkenträger 1 verschoben bis die Rastzähne 13, 14 außer Eingriff sind und der Zinkenträger 1 gegenüber dem Hebel 3 verdreht werden kann. Zum drehfesten Verbinden wird dann die Wellenmutter 15 wieder festgezogen.

Grundsätzlich sind auch andere formschlüssige Verbindungen denkbar, bei denen Vorsprünge am Verbindungsflansch oder dem Verbindungsabschnitt in Ausnehmungen des jeweiligen gegenüberliegenden Teils (Verbindungsabschnitt oder Verbindungsflansch) eingreifen. Zur Sicherung des Hebels 3 gegenüber dem Verbindungsflansch 6 ist grundsätzlich auch eine Schraubverbindung gemäß der ersten Ausführungsform denkbar.

Die Figur 5 zeigt eine Ansicht einer dritten Ausführungsform einer erfindungsgemäßen Zinkenträgeranordnung und Figur 6 eine Seitenansicht hiervon. Die Figuren 5 und 6 werden im folgenden beschrieben, wobei Bauteile, die mit Bauteilen der ersten Ausführungsform übereinstimmen, mit den selben Bezugszeichen versehen sind und bei den Figuren 1 bis 3 beschrieben sind.

Im Unterschied zu der ersten Ausführungsform weisen die Verbindungsmittel 5 ein erstes Klemmteil 16 und ein zweites Klemmteil 17 auf, die zwischen sich den Zinkenträger 1 einklemmen. Das erste Klemmteil 16 ist einstückig mit dem Hebel 3 ausgebildet und weist eine erste Ausnehmung 19 auf, in der der Zinkenträger 1 sitzt. Das zweite Klemmelement 17 ist als separates Bauteil ausgebildet und weist eine zweite Ausnehmung 20 auf, die zusammen mit der ersten Ausnehmung 19 einen Durchbruch bildet, in dem der Zinkenträger 1 einsitzt. Das zweite Klemmelement 17 ist über Befestigungsschrauben 18, 18' mit dem ersten Klemmelement 16 verbunden, wobei das zweite Klemmelement 17 sich nicht direkt gegen das erste Klemmelement 16 abstützt sondern ausschließlich gegen den Zinkenträger 1, so dass der Hebel 3 sicher auf dem Zinkenträger 1 über Reibschluss befestigt ist. Grundsätzlich ist es auch denkbar, dass die erste Ausnehmung 19 und die zweite Ausnehmung 20 mit einer Längsverzahnung ausgebildet ist, die in eine entsprechende Wellenverzahnung des Zinkenträgers 1 eingreift, um eine drehsichere formschlüssige Verbindung herzustellen.

### Bezugszeichenliste

- 1: Zinkenträger
- 2: Greiferzinken
- 3: Hebel
- 4: Steuerteil
- 5: Verbindungsmittel
- 6: Verbindungsflansch
- 7: Verbindungsabschnitt
- 8: Befestigungsschrauben
- 9: erste Befestigungsbohrung
- 10: zweite Befestigungsbohrung
- 11: zentrale Bohrung
- 12: Bohrung
- 13: erster Rastzahn
- 14: zweiter Rastzahn
- 15: Wellenmutter
- 16: erstes Klemmelement
- 17: zweites Klemmelement
- 18: Befestigungsschraube
- 19: erste Ausnehmung
- 20: zweite Ausnehmung

- D: Drehachse

## Patentansprüche

1. Zinkenträgeranordnung, für eine Haspel einer Erntemaschine für Halmfrüchte, umfassend
einen Zinkenträger (1), der um eine Drehachse (D) drehbar an der Haspel befestigbar ist,
ein Stellelement (3), das mit einer Stellanordnung der Haspel zum Verdrehen des Zinkenträgers (1) um die Drehachse (D) verbindbar ist, und
Verbindungsmittel (5), mittels derer der Zinkenträger (1) und das Stellelement (3) miteinander verbindbar sind,
**dadurch gekennzeichnet,**
**dass** der Zinkenträger (1) und das Stellelement (3) in unterschiedlichen Drehpositionen zueinander relativ zur Drehachse (D) lösbar verbindbar sind.

2. Zinkenträgeranordnung nach Anspruch 1,
**dadurch gekennzeichnet,**
**dass** die Verbindungsmittel (5) einen Verbindungsflansch (6) am Zinkenträger (1) und einen Verbindungsabschnitt (7) am Stellelement (3) umfassen, die miteinander verbunden sind.

3. Zinkenträgeranordnung nach einem der Ansprüche 1 oder 2,
**dadurch gekennzeichnet,**
**dass** der Zinkenträger (1) mit dem Stellelement (3) verschraubt ist.

4. Zinkenträgeranordnung nach Anspruch 2,
**dadurch gekennzeichnet,**
**dass** in dem Verbindungsflansch (6) um die Drehachse (D) verteilt erste Befestigungsbohrungen (9) angeordnet sind,
**dass** das Stellelement (3) eine bestimmte Anzahl zweiter Befestigungsbohrungen (10, 10') aufweist, die je nach Drehposition des Zinkenträgers (1) und des Stellelements (3) zueinander mit einer entsprechenden Anzahl von ersten Befestigungsbohrungen (9) in Überdeckung angeordnet sind, und
**dass** Befestigungsschrauben (8, 8') durch die in Überdeckung angeordneten ersten und zweiten Befestigungsbohrungen geführt sind und den Zinkenträger (1) mit dem Stellelement (3) verbinden.

5. Zinkenträgeranordnung nach Anspruch 4,
**dadurch gekennzeichnet,**
**dass** zwei zweiten Bohrungen (10, 10') vorgesehen sind, die mit zwei diametral zueinander angeordneten ersten Bohrungen (9) in Überdeckung angeordnet sind.

6. Zinkenträgeranordnung nach Anspruch 2,
**dadurch gekennzeichnet,**
**dass** der Verbindungsflansch (6) eine Stirnverzahnung mit in Richtung der Drehachse (D) vorstehenden Rastzähnen (13) aufweist, und
**dass** der Verbindungsabschnitt (7) entsprechend gestaltete Rastzähne (14) aufweist, die in Verzahnungseingriff zur Stirnverzahnung des Verbindungsflansches (6) steht.

7. Zinkenträgeranordnung nach einem der Ansprüche 1 oder 2,
**dadurch gekennzeichnet,**
**dass** der Verbindungsabschnitt zwei Klemmelemente (16, 17) aufweist, die auf den Zinkenträger (1) geklemmt sind.

8. Haspel umfassend
mehrere Haspelsterne, die um eine Rotationsachse drehbar angeordnet sind, mehrere Zinkenträgeranordnungen gemäß einem der vorangehenden Ansprüche, die mit mindestens zwei Haspelsternen um eine Drehachse (D) parallel zu Rotationsachse drehbar verbunden sind, sowie
eine Stellanordnung, zu der die Haspelsterne drehbar sind und mit der die Stellelemente (3) jedes Zinkenträges (1) antriebsverbunden sind.

9. Haspel nach Anspruch 8,
**dadurch gekennzeichnet,**
**dass** die Stellanordnung eine Stellkurve umfasst, wobei Führungselemente der Stellelemente entlang der Stellkurve geführt sind.

## Claims

1. Tine carrier arrangement for a reel of a harvesting machine for cereals comprising
a tine carrier (1), attachable rotationally around an axis of rotation (D) on the reel,
an adjustment element (3), which is connectable to an adjustment arrangement of the reel for rotating the tine carrier (1) around the axis of rotation (D), and
connection means (5), by means of which the tine carrier (1) and the adjustment element (3) are connectable to each other,
**characterised in**
**that** the tine carrier (1) and the adjustment element (3) are connectable in a detachable manner in different rotational positions to each other relative to the axis of rotation (D).

2. Tine carrier arrangement according to claim 1,
**characterised in**
**that** the connection means (5) comprise a connection flange (6) on the tine carrier (1) and a connection portion (7) on the adjustment element (3), which are connected to each other.

3. Tine carrier arrangement according to one of claims 1 or 2,
**characterised in**
**that** the tine carrier (1) is screwed to the adjustment element (3).

4. Tine carrier arrangement according to claim 2,
**characterised in**
**that** first attachment bores (9) are arranged distributedly around the axis of rotation (D) in the connection flange (6),
**that** the adjustment element (3) has a specific number of second attachment bores (10, 10'), which, depending on the rotational position of the tine carrier (1) and of the adjustment element (3) relative to each other, are arranged congruently with a corresponding number of first attachment bores (9), and that attachment screws (8, 8') are passed through the first and second attachment bores arranged congruently with each other and connect the tine carrier (1) to the adjustment element (3).

5. Tine carrier arrangement according to claim 4,
**characterised in**
**that** two second bores (10, 10') are provided, which are arranged congruently with two diametrically to each other arranged first bores (9).

6. Tine carrier arrangement according to claim 2,
**characterised in**
**that** the connection flange (6) has a serration with locking teeth (13) projecting in the direction of the axis of rotation (D), and
**that** the connection portion (7) has correspondingly formed locking teeth (14), which engage in the serration of the connection flange (6).

7. Tine carrier arrangement according to one of claims 1 or 2,
**characterised in**
**that** the connection portion has two clamping elements (16, 17), which are clamped onto the tine carrier (1).

8. Reel comprising
several reel stars, which are arranged rotatably around an axis of rotation, several tine carrier arrangements according to one of the preceding claims, which are rotatably connected to at least two reel stars around an axis of rotation (D) parallel to the rotational axis, as well as
an adjustment arrangement, relative to which the reel stars are rotatable and with which the adjustment elements (3) of each tine carrier (1) are drive-wise connected.

9. Reel according to claim 8,
**characterised in**
**that** the adjustment arrangement comprises a setting curve, wherein guiding elements of the adjustment elements are guided along the setting curve.

## Revendications

1. Agencement porte-dents pour un rabatteur d'une récolteuse de plantes céréalières, comportant
un porte-dents (1), susceptible d'être fixé sur le rabatteur, en rotation autour d'un axe de rotation (D),
un élément de réglage (3), susceptible d'être relié à un dispositif de réglage du rabatteur pour faire tourner le porte-dents (1) autour de l'axe de rotation (D), et
des moyens de liaison (5), permettant de relier le porte-dents (1) et l'élément de réglage (3),
**caractérisé en ce que**,
le porte-dents (1) et l'élément de réglage (3) sont susceptibles d'être reliés l'un à l'autre dans différentes positions de rotation relatives, par rapport à l'axe de rotation (D).

2. Agencement porte-dents selon la revendication 1,
**caractérisé en ce que**
les moyens de liaison (5) comprennent une bride d'assemblage (6) sur le porte-dents (1) et un tronçon d'assemblage (7) sur l'élément de réglage (3), qui sont reliés l'un à l'autre.

3. Agencement porte-dents selon l'une quelconque des revendications 1 ou 2,
**caractérisé en ce que**
le porte-dents (1) est boulonné sur l'élément de réglage (3).

4. Agencement porte-dents selon la revendication 2,
**caractérisé en ce que**
dans la bride d'assemblage (6), des premiers perçages de fixation (9) sont disposés en répartition autour de l'axe de rotation (D),
**en ce que** l'élément de réglage (3) comporte un certain nombre de deuxièmes perçages de fixation (10, 10'), qui en fonction de la position en rotation relative du porte-dents (1) et de l'élément de réglage (3) sont disposés en recouvrement avec un nombre correspondant de premiers trous de fixation (9) et
**en ce que** des boulons de fixation (8, 8') sont guidés à travers les premiers et les deuxièmes perçages de fixation et relient le porte-dents (1) à l'élément de réglage (3).

5. Agencement porte-dents selon la revendication 4,
**caractérisé en ce que**
il est prévu deux deuxièmes perçages (10, 10') qui sont disposés en recouvrement avec deux premiers perçages (9) en disposition diamétralement opposée.

6. Agencement porte-dents selon la revendication 2,
**caractérisé en ce que**
la bride d'assemblage (6) comporte une denture frontale avec des dents d'enclenchement (13) saillant en direction de l'axe de rotation (D) et
**en ce que** le tronçon d'assemblage (7) comporte des dents d'enclenchement (14) conformées en conséquence, qui s'engrènent dans la denture frontale de la bride d'assemblage (6).

7. Agencement porte-dents selon l'une quelconque des revendications 1 ou 2,
**caractérisé en ce que**
le tronçon d'assemblage comporte deux éléments de serrage (16, 17) qui sont calés sur le porte-dents (1).

8. Rabatteur, comprenant
plusieurs étoiles de rabattage qui sont disposées en rotation autour d'un axe de révolution,
plusieurs agencements porte-dents selon l'une quelconque des revendications précédentes, qui sont reliés en rotation à au moins deux étoiles de rabattage, autour d'un axe de rotation (D) parallèle à l'axe de révolution, ainsi
qu'un dispositif de réglage par rapport auquel les étoiles de rabattage sont rotatives et avec lequel les éléments de réglage (3) de chaque porte-dents (1) sont reliés en entraînement.

9. Rabatteur selon la revendication 8,
**caractérisé en ce que**
l'agencement de réglage comprend une came de réglage, des éléments de guidage des éléments de réglage étant guidés le long de la came de réglage.
